Europäisches Patentamt

European Patent Office

Office européen des brevets

(19)

(11) **EP 0 618 697 B1**

(12) **EUROPÄISCHE PATENTSCHRIFT**

(45) Veröffentlichungstag und Bekanntmachung des Hinweises auf die Patenterteilung:
**25.09.2002  Patentblatt 2002/39**

(51) Int Cl.7: **H04L 5/06**, H04N 7/14

(21) Anmeldenummer: **94104557.7**

(22) Anmeldetag: **23.03.1994**

(54) **Verfahren zur Korrektur von Phasen- und Amplitudenfehlern in COFDM Signalen**

Method for the correction of phase and amplitude errors in COFDM signals

Procédé de correction d'erreurs de phase et d'amplitude pour signaux MDFOC

(84) Benannte Vertragsstaaten:
**AT BE CH DE ES FR GB IT LI**

(30) Priorität: **27.03.1993  DE 4310031**

(43) Veröffentlichungstag der Anmeldung:
**05.10.1994  Patentblatt 1994/40**

(73) Patentinhaber: **GRUNDIG Aktiengesellschaft 90471 Nürnberg (DE)**

(72) Erfinder:
- **Reis, Johannes, GRUNDIG E.M.V., Elek. Mechanische D-90748 Fürth (DE)**
- **Zumkeller, Markus, GRUNDIG E.M.V., Elek. Mechan. D-90748 Fürth (DE)**

(56) Entgegenhaltungen:
**EP-A- 0 365 431            EP-A- 0 453 203**
**WO-A-92/10043**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Korrektur von Phase und Amplitude eines breitbandigen Empfangssignals mit Hilfe von Referenzsignalen gemäß dem Oberbegriff des Patentanspruchs 1 und eine Schaltungsanordnung zur Durchführung des Verfahrens.

Aus der Veröffentlichung "Entwicklungstendenzen im Fernsehrundfunk", erschienen in telekom praxis, Ausgabe 12/92, Seite 32 bis 38, ist bekannt, daß weltweit an einem digitalen terrestrischen Fernsehsystem gearbeitet wird. Zur digitalen Übertragung soll bei diesem Fernsehsystem das COFDM-Verfahren (Coded Orthogonal Frequency Division Multiplex) eingesetzt werden. Dadurch wird eine höhere Übertragungsqualität bei effizienterer Nutzung der zur Übertragung benutzten Frequenzbereiche erzielt.

Das COFDM-Übertragungsverfahren ist aus WO 88/00417 bekannt. Es wird die zu übertragende Information zunächst analog-digital gewandelt, sofern die Information analog vorliegt. Anschließend wird die digitale Information mit einem Kanalcodierer codiert, wodurch ein Fehlerschutzcode der Information hinzugefügt wird. Schließlich wird die kanalcodierte Information einer Vielzahl von Einzelträgerfrequenzen aufmoduliert, wobei die zeitliche Reihenfolge der Information verwürfelt wird. Dadurch erreicht man einen erhöhten Schutz gegen zeit- und frequenzselektive Störungen.

Aus der WO 92/10043 ist ein Verfahren zur Frequenzregelung bei lokalen Oszillatoren eines Empfängers bekannt. Die empfangenen digitalen Fernsehdaten werden dabei nach dem OFDM-Verfahren (Orthogonal Frequency Division Multiplex) übertragen. Zusätzlich zu den digitalen Fernsehdaten werden noch zwei Pilotsignale in jedem Übertragungsrahmen übertragen, die eine konstante Frequenzdifferenz aufweisen. Um die Frequenz der lokalen Oszillatoren im Empfänger zu regeln, wird der Anfang eines Sendezeitschlitzes detektiert, danach die Position der beiden Pilotsignale im Übertragungsrahmen bestimmt und anschließend die Phasendifferenz zwischen den beiden Pilotsignalen als Funktion der Zeit berechnet. Daraus kann dann eine Regelgröße für die lokalen Oszillatoren abgeleitet werden.

Aus der nicht vorveröffentlichten Anmeldung P 42 40 609.9 der Anmelderin ist ein Verfahren zur Frequenzgangkorrektur bekannt. Es wird bei terrestrischer Übertragung digitaler Signale (DAB) eingesetzt. Hierbei werden frequenzselektive Amplituden- und Phasenverzerrungen eines differenzphasenmodulierten COFDM-Übertragungssignals von einer Steuereinheit detektiert, eine entsprechende Korrekturkennlinie berechnet und das Spektrum des Übertragungssignals mit der Korrekturkennlinie gewichtet. Dabei ist es unerheblich, ob die detektierten Verzerrungen auf der Übertragungsstrecke oder in Sender- oder Empfängerbaugruppen entstanden sind. Das Verfahren ermöglicht auch die Zuverlässigkeit der Empfangssignale abzuschätzen.

Von Nachteil bei diesem Verfahren ist, daß zur Berechnung der Korrekturkennlinie bei in Zeit und Frequenz stark schwankenden Verzerrungen ein hoher Rechenaufwand erforderlich ist.

Ein weiterer Nachteil besteht darin, daß das Verfahren bei nicht differenzphasenmodulierten Signalen nur einen Teil der möglichen Verzerrungen korrigieren kann.

Aus EP 0 365 431 A1 ist ein Verfahren zur Korrektur von Phase und Amplitude eines breitbandigen Empfangssignales bekannt. Bei diesem Verfahren erfolgt eine symbolweise Übertragung des Rundfunksignales. Der Signalübertragung ist ein Schutzintervall zugefügt.

Es ist daher die Aufgabe der Erfindung, ein Verfahren zur Entzerrung eines nicht differenzphasenmodulierten COFDM-Ubertragungssignals anzugeben. Der dafür erforderliche Rechenaufwand soll möglichst gering sein.

Diese Aufgabe wird erfindungsgemäß durch die kennzeichnenden Merkmale des Patentanspruchs 1 gelöst.

Das Verfahren nach Patentanspruch 1 weist den Vorteil auf, daß aufgrund des in jedem Übertragungsrahmen übertragenen Referenzsignals die Amplituden- und Phasenverzerrungen der Datensignale in Abhängigkeit von Zeit und Frequenz für den gesamten Übertragungsrahmen interpoliert werden können. Diese Berechnung kann für jede Einzelträgerfrequenz oder für eine Gruppe aus mehreren Einzelträgerfrequenzen eines Übertragungsrahmens durchgeführt werden. Ein weiterer Vorteil besteht darin, daß eine Maximum-Likelihood-Entscheidung bezüglich der Amplitude und Phase jeder Einzelträgerfrequenz durchgeführt wird. Dadurch können geringe Phasen- oder Amplitudenverzerrungen sofort berichtigt werden, bei großen Verzerrungen wird erkannt, daß die Zuverlässigkeit des Empfangssignals abnimmt.

Weiterhin weist das Verfahren den Vorteil auf, daß sich die Amplitudenkorrektur an veränderte Empfangsverhältnisse anpaßt. Durch die Berücksichtigung einer Anzahl zuletzt empfangener Signale wird ein stetiger Verlauf der entzerrten Empfangssignalamplitude erreicht.

Das Verfahren nach Patentanspruch 2 weist den Vorteil auf, daß aufgrund des bekannten zeitlichen Verlaufs der Amplituden- und Phasenverzerrung auch eine Amplitudenund Phasenkorrektur gemäß einer Korrekturkennlinie höherer Ordnung berechnet werden kann.

Das Verfahren nach Patentanspruch 3 weist den Vorteil auf, daß durch eine einzige Multiplikation des Kurzzeitspektrums des Empfangssignals mit der Korrekturkennlinie die Amplitudenkorrektur und die Phasenkorrektur durchgeführt werden kann.

Das Verfahren nach Patentanspruch 4 weist den Vorteil auf, daß keine Fouriertransformation und

-rücktransformation eigens für die frequenzselektive Korrektur von Amplitude und Phase des Empfangssignals erforderlich ist. Dadurch kann erheblicher rechen- und schaltungstechnischer Aufwand vermieden werden.

Die Verwendung des Verfahrens nach Patentanspruch 5 weist den Vorteil auf, daß eine Entzerrung von Fernsehübertragungen ermöglicht wird. Weiterhin vorteilhaft ist, daß die Korrekturwerte zur Amplitudenkorrektur einfach berechnet werden können, da die Amplitude des Spektrums bei einer Übertragung digitaler Fernsehdaten nach dem COFDM-Verfahren idealerweise diskrete Werte annimmt.

Die Schaltungsanordnung nach Patentanspruch 6 weist den Vorteil auf, daß die Berechnung der Korrekturkennlinie, die Korrektur der Einzelträgerfrequenzen und die Maximum-Likelihood-Entscheidung durch eine Steuereinheit durchgeführt werden kann, die ohnehin zur Steuerung des Empfängers vorgesehen werden muß. Der zusätzliche Schaltungsaufwand zur Korrektur des Empfangssignals beschränkt sich somit auf einen relativ preisgünstigen und hochintegrierten Speicher.

Die Erfindung wird im folgenden näher beschrieben und erläutert. Es zeigt:

Fig. 1    einen möglichen Verlauf der zur Übertragung nach dem COFDM-Verfahren verwendeten Einzelträgerfrequenzen als komplexe Zeiger,

Fig. 2    eine mögliche Phasenverzerrung einer Einzelträgerfrequenz,

Fig. 3    mögliche Phasendifferenzen der Phasen empfangener Einzelträger und der ursprünglich den Einzelträgerfrequenzen aufmodulierten Phasen,

Fig.4    mögliche Phasendifferenzen der Phasen empfangener Einzelträger und der ursprünglich den Einzelträgerfrequenzen aufmodulierten Phasen nach einer Phasenkorrektur und

Fig. 5    eine Schaltungsanordnung zur Durchführung der Korrektur.

Im folgenden Ausführungsbeispiel wird das COFDM-Verfahren zur Übertragung digitaler Fernsehdaten benutzt. Dabei werden die Einzelträgerfrequenzen mit den Fernsehdaten 4-PSK (Phase-Shift-Keying) moduliert. Im Empfänger wird in jedem Übertragungsrahmen nach einem Synchronisationssignal SYNC zur zeitlichen Synchronisierung des Empfängers, bei dem die Amplituden aller Einzelträgerfrequenzen Null sind, ein Referenzsignal REF mit einer Referenzphase PR und anschließend ein Datenblock mit n Datensignalen D1 bis Dn, die bezüglich der Referenzphase PR phasenmoduliert sind, empfangen. Durch die 4-PSK-Modulation jeder Einzelträgerfrequenz können mit jeder Einzelträgerfrequenz zwei binäre Zustände, z.B. 01, also ein Dibit, übertragen werden.

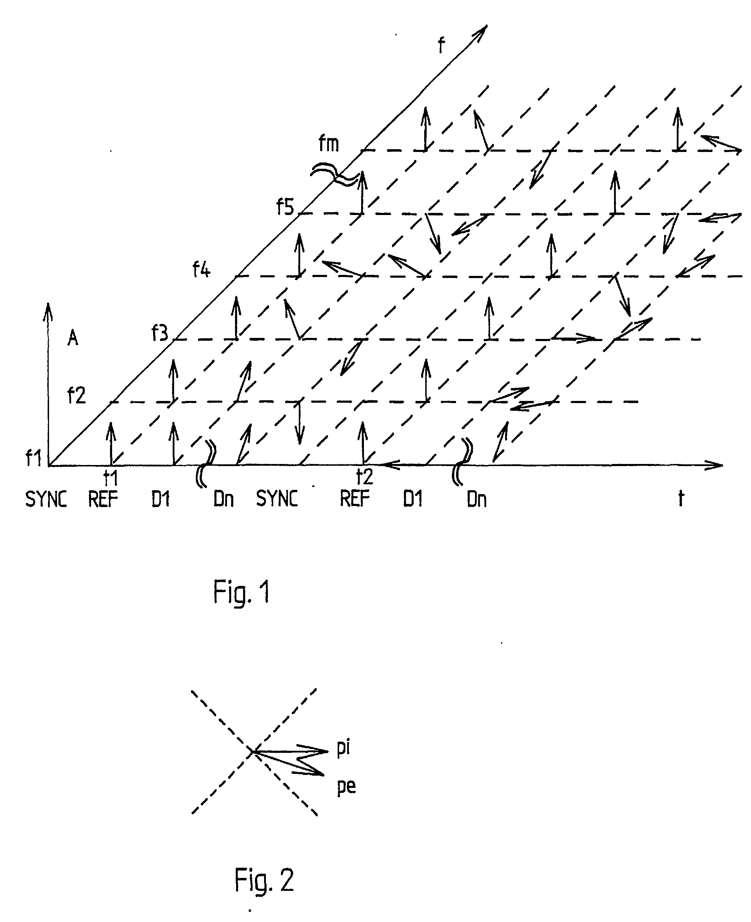

Fig. 1 zeigt das Übertragungssignal, wobei die übertragenen Einzelträgerfrequenzen als komplexe Zeiger mit Amplitude und Phase in Abhängigkeit von Zeit t und Frequenz f dargestellt sind. Die Frequenzen $f_1$ bis $f_m$ sind die Einzelträgerfrequenzen des COFDM-Übertragungsverfahrens, die äquidistant auf der Frequenzachse f angeordnet sind. Die Signale SYNC zur Empfängersynchronisation, REF zur Übertragung der Referenzphase PR und D1 bis Dn zur Übertragung der Fernsehdaten sind äquidistant auf der Zeitachse t angeordnet und bilden einen Übertragungsrahmen. Aufgrund der Phasenmodulation der Datensignale D1 bis Dn können die Einzelträgerfrequenzen phasenversetzt zur modulationsfreien Referenzphase PR des Referenzsignals REF angeordnet sein, was durch entsprechende Drehungen der komplexen Zeiger ausgedrückt wird. Die Referenzphase PR wird für jeden Übertragungsrahmen durch das Referenzsignal REF neu festgelegt. Daher kann das Referenzsignal REF auch keine Phasenverzerrung aufweisen. Dabei ist es nicht erforderlich, daß alle Einzelträgerfrequenzen des Referenzsignals REF die gleiche Referenzphase PR aufweisen. Die Datensignale D1 bis Dn weisen entsprechend Fig. 1 meist Phasenverzerrungen auf. Diese können durch die Übertragunsstrecke und/oder durch Sender- und Empfängerbaugruppen verursacht werden. Der Übersichtlichkeit wegen wurde auf die Darstellung von möglichen Amplitudenverzerrungen verzichtet.

Zur Demodulation im Empfänger wird die Phasendifferenz zwischen der übertragenen Referenzphase PR und den Phasen der Einzelträgerfrequenzen desselben Übertragunsrahmens berechnet. Decodiert man diese Phasendifferenz anschließend in binäre Werte, so erhält man die übertragene Information zurück.

Aufgrund von Verzerrungen ist die Phasendifferenz bei einer 4-PSK-Modulation nicht exakt ein gradzahliges Vielfaches von 90°, sondern beispielsweise 100°. Um auch bei Verzerrungen, die derart gering sind, noch binäre Zustände aus den Phasendifferenzen decodieren zu können, wird eine Maximum-Likelihood-Entscheidung durchgeführt.

Dadurch werden geringfügige Phasenabweichungen korrigiert, und das Übertragungssystem weist eine gewisse Fehlertoleranz auf. Es können beispielsweise Phasenwerte in einem Intervall zwischen 45° und 135° im Empfänger einer Phase von 90° zugeordnet werden. Fig. 2 verdeutlicht dies graphisch. Die ideale Phase Pi, die bei der Maximum-Likelihood-Entscheidung erkannt wird, entspricht nicht der Phasenlage Pe der empfangenen Einzelträgerfrequenz. Strichliniert sind mögliche Grenzen für die Maximum-Likelihood-Entscheidung eingezeichnet.

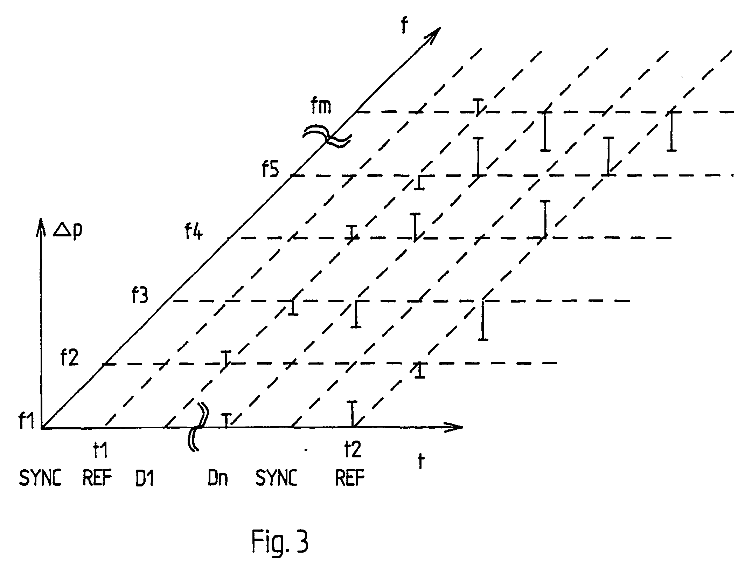

Fig. 3 zeigt die Phasenabweichung P der empfangenen Einzelträgerfrequenzen von einer der vier möglichen Phasenlagen bei 4-PSK-Modultaion. Per Definition weist das Referenzsignal REF eines ersten Übertragungsrahmens, das zum Zeitpunkt t1 empfangenen wird, keine Phasenverzerrung auf. Die Phasenverzerrungen der Datensignale D1 bis Dn sind frequenzabhängig dargestellt. Da während der Synchronisationssignale SYNC alle Einzelträgerfrequenzen die Amplitude Null aufweisen, ist kein Signal feststellbar. Das Referenzsignal REF des zweiten Übertragungsrahmens definiert für die folgenden Datensignale D1 bis Dn die Referenzphase PR neu, wobei davon ausgegangen wird, daß die Referenzphase PR zeitinvariant ist. Dennoch können die in unterschielichen Übertragungsrahmen empfangenen Referenzphasen PR(t1) und PR (t2) eine Phasendifferenz P aufgrund von Phasenverzerrungen aufweisen. Diese Phasendifferenz ist in Fig. 3 für das Referenzsignal REF, das zum Zeitpunkt t2 im zweiten Übertragungsrahmen empfangen wird, frequenzabhängig dargestellt.

Kommt es, insbesondere aufgrund von zeitabhängigen Parameterschwankungen zu Abweichungen $\Delta P$ der empfangenen Phasen, wie in Fig. 3 dargestellt, welche nicht durch Modulation bedingt sind und nicht innerhalb der oben beschriebenen korrigierbaren Fehlertoleranz liegen, treten trotz Fehlertoleranz Fehler bei der Decodierung auf. Um dies zu vermeiden, wird eine Phasenentzerrung bei dem Empfangssignal durchgeführt. Bei dieser Phasenentzerrung berechnet eine Steuereinheit die Phasendifferenz $d_{PR}$ zwischen mindestens zwei Referenzphasen PR(t1) und PR(t2) derselben Einzelträgerfrequenz. In der Regel werden dafür Referenzsignale REF zeitlich aufeinanderfolgender Ubertragungsrahmen gemäß (1) ausgewertet.

$$d_{PR} = PR\,(t1) - PR\,(t2) \qquad (1)$$

Ist diese Phasendifferenz $d_{PR}$ betragsmäßig größer als ein Schwellwert, wird erkannt, daß eine Phasenentzerrung erforderlich ist, und es wird ein Quotient Q aus der Phasendifferenz $d_{PR}$ und der Zeit dTR, die zwischen dem Empfang der beiden Referenzsignale REF(t1) und REF(t2) liegt, gemäß (2) gebildet.

$$Q = \frac{d_{PR}}{dTR} \qquad (2)$$

Dieser Quotient Q gibt nun die lineare zeitabhängige Änderung der Referenzphase PR an. Damit kann für jedes Datensignal Di in Abhängigkeit vom Zeitpunkt seiner Aussendung ein zu erwartender linearer Phasenfehler Pfi gemäß (3) berechnet werden.

$$Pfi = Q \cdot (T(REF, t1) - T\,(Di)) \qquad (3)$$

Werden die derart berechneten Phasenfehler Pfi von den Phasen der Einzelträgerfrequenzn aus Fig. 3 subtrahiert, können linear zeitabhängige Phasenfehler eleminiert werden.

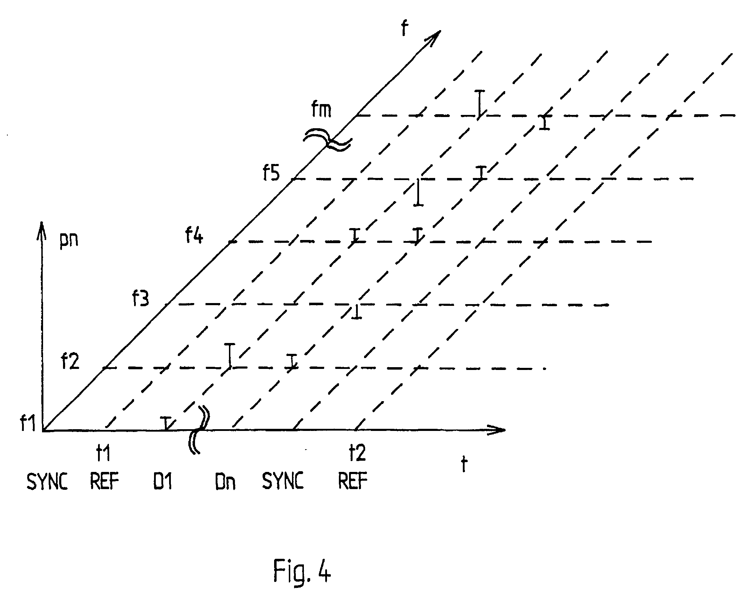

Fig. 4 zeigt die um den berechneten Anteil bereinigten Phasenverzerrungen Pn, die aufgrund der anschließenden Most-Likelihood-Entscheidung berichtigt werden können, so daß kein übertragungsfehler auftritt. Hierbei kann die Phasenkorrektur durchaus unterschiedliche Auswirkungen haben. Exemplarisch sei die Einzelträgerfrequenz f1 betrachtet. Gemäß der Darstellung in Fig. 3 weist diese Einzelträgerfrequenz für das Datensignal D1 keine Phasenverzerrung $\Delta P$ und für das Datensignal Dn eine geringe Phasenverzerrung $\Delta P$ auf. Die Phasenverzerrung $\Delta P$ des Referenzsignals des zweiten Übertragungsrahmnens REF(t2) weist im Vergleich zum Referenzsignal des ersten Übertragungsrahmens REF(t1) bereits eine mittlere Phasenverzerrung auf. Die Phasenverzerrung $\Delta P$ der Einzelträgerfrequenz f1 nimmt somit mit der Zeit t zu, jedoch nicht linear. Aufgrund der linear berechneten Phasenkorrektur Pfi ergibt sich für die Einzelträgerfrequenz f1 daher auch nach der Phasenkorrektur eine Phasenverzerrung Pn, die jedoch geringer ist, wie in Fig. 4 dargestellt. Für das Datensignal D1 entsteht eine Phasenverzerrung Pn, die innerhalb der Fehlertoleranz liegt und daher nicht zu einem übertragungsfehler führt. Für das Datensignal Dn ist keine Phasenverzerrung Pn der Einzelträgerfrequenz f1 vorhanden, da durch die lineare Korrektur die ursprünglich vorhandene Phasenverzerrung P beseitigt werden kann.

Die Zeitabhängigkeit der Phasenverzerrung P kann durch eine Steuereinheit MP analysiert werden, so daß ein optimales mathematisches Modell für die Berechnung der Phasenkorrekturwerte Pfi zur Interpolation der Phasen der Datensignale D1 bis Dn gefunden werden kann, das natürlich nicht linear sein muß.

Es besteht die Möglichkeit, auch Referenzphasen PR bereits früher empfangener Übertragungsrahmen in die Berechnung mit einzubeziehen und eine zeitabhängige Gewichtung dieser Referenzphasen PR durchzuführen. Dadurch ist eine Berücksichtigung zeitlich nichtlinearer Phasenverzerrungen möglich. Die Gleichungen (1) bis (3) sind dann entsprechend zu modifizieren.

Um nicht für jede Einzelträgerfrequenz $f_1$ bis $f_m$ die oben beschriebene Berechnung durchführen zu müssen, ist es denkbar, beispielsweise nur für jede zweite oder jede 16-te Einzelträgerfrequenz obige Berechnung durchzuführen und fehlende Quotienten Q aus den berechneten Quotienten Q in Abhängigkeit von der Einzelträgerfrequenz zu interpolieren. Dadurch kann Kanalkapazität im Referenzsignal REF frei gemacht werden, die zur Übertragung zusätzlicher Daten genutzt werden kann.

Entsprechend der oben beschriebenen Phasenkorrektur werden auch die Amplituden der Einzelträgerfrequenzen korrigiert. Die Amplituden der Referenzsignale werden in einem Speicher SPE zwischengespeichert, die Amplituden der Einzelträgerfrequenzen werden aufgrund der interpolierten Amplitudenkorrekturwerte neu festgelegt. Die Interpolation der Amplitude kann dabei sowohl in Abhängigkeit von der Zeit als auch von der Frequenz erfolgen.

Aus der frequenzabhängigen Amplituden- und Phasenkorrektur wird anschließend eine komplexe Korrekturkennlinie berechnet, mit der das Kurzzeitspektrum SP des Empfangssignals multipliziert wird. Die Korrekturkennlinie setzt sich aus dem Verstärkungswert für die Amplitude und dem Phasenkorrekturwert Pfi für jede Einzelträgerfrequenz zusammen. Die Multiplikation kann an einer Stelle im Signalpfad durchgeführt werden, an der das Kurzzeitspektrum ohnehin bereits vorliegt, beispielsweise nach der Fouriertransformation FFT.

Alternativ dazu kann auch für eine Einzelträgerfrequenz ein Korrekturzeiger berechnet werden, der sich aus dem Differenzzeiger zwischen zwei Referenzzeigern einer Einzelträgerfrequenz ergibt. Dieser wird in Abhängigkeit vom Empfangszeitpunkt des zu korrigierenden Signals mit einem Maßstabsfaktor multipliziert und zum ursprünglich empfangenen Zeiger addiert, um den in Phase und Amplitude korrigierten Zeiger für die Einzelträgerfrequenz zu erhalten.

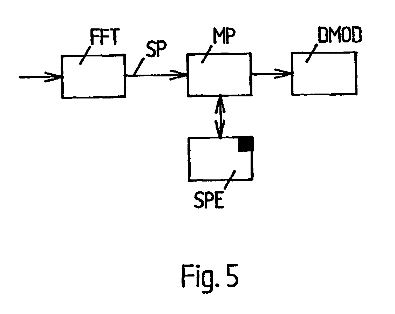

Um nicht für jeden Übertragungsrahmen erneut diese Korrekturkennlinie berechnen zu müssen, wird sie in einem Speicher SPE abgelegt und kann zur Korrektur von Datensignalen mehrerer Übertragungsrahmen dienen. Eine Neuberechnung der Korrekturkennlinie kann durch den Benutzer oder die Steuereinheit MP eingeleitet werden. Hierfür wertet die Steuereinheit MP die entzerrten Amplituden und die entzerrten Phasen der Einzelträgerfrequenzen aus. Sobald die Amplituden oder Phasen der Referenzsignale REF stark schwanken, ist eine Neuberechnung der Korrekturkennlinie erforderlich. Fig. 5 zeigt eine Schaltungsanordnung zur Durchführung der Korrektur von Phase und Amplitude des Empfangssignals. Nachdem das digitale Empfangssignal eines ersten Übertragungsrahmens durch eine schnelle Fouriertransformation FFT im Spektralbereich als Kurzzeitspektrum SP vorliegt, wertet eine Steuereinheit MP dieses Kurzzeitspektrum SP aus. Das Referenzsignal REF und die Datensignale D1 bis Dn werden in einem Speicher SPE zwischengespeichert. Ebenso werden die Signale eines zweiten Übertragungsrahmens, der nach dem ersten übertragen wird, im Speicher SPE zwischengespeichert. Anschließend wird aus den Referenzsignalen REF der beiden Übertragungsrahmen die komplexe Korrekturkennlinie durch die Steuereinheit MP berechnet, die ebenfalls im Speicher SPE abgespeichert wird. Nachdem die Einzelträgerfrequenzen des ersten Übertragungsrahmens mit der Korrekturkennlinie multipliziert wurden, werden die Einzelträgerfrequenzen der Maximum-Likelihood-Entscheidung durch die Steuereinheit MP zugeführt und schließlich im Demodulator DMOD weiterverarbeitet. Wird bei der Maximum-Likelihood-Entscheidung Maximum-Likelihood-Entscheidung festgestellt, daß die Phasen der empfangenen Einzelträgerfrequenzen stark von den möglichen Modulationsphasen (bei 4-PSK-Modulation: 90°, 180°, 270° und 360°) abweichen, wird die Information als unzuverlässig erkannt.

Anschließend werden im Speicher SPE die Empfangsdaten des ersten Übertragungsrahmens durch die Empfangsdaten des folgenden dritten Übertragungsrahmens überschrieben. Die Empfangsdaten des zweiten Übertragungsrahmens werden anschließend mit der bereits vorher berechneten Korrekturkennlinie multipliziert und der Maximum-Likelihood-Entscheidung zugeführt. Wird bei dieser Entscheidung durch die Steuereinheit MP festgestellt, daß die Amplitudenschwankungen oder die Phasenverzerrungen groß sind, wird eine neue Korrekturkennlinie durch die Steuereinheit MP berechnet. Diese neue Korrekturkennlinie wird in Abhängigkeit von den Referenzsignalen REF des zweiten und dritten Übertragungsrahmens berechnet. Die neue Korrekturkennlinie ersetzt im Speicher SPE die bisher abgespeicherte und wird zur Korrektur der Empfangsdaten nach dem ersten Übertragungsrahmen verwendet. Sobald es erforderlich ist, wird wieder eine neue Korrekturkennlinie berechnet.

Sollen auch nichtlineare Verzerrungen der Phase korrigiert werden, sind im Speicher SPE auch bereits früher übertragene Referenzsignale REF abzuspeichern und durch die Steuereinheit MP bei der Berechnung, insbesondere der Phasenkorrekturwerte zu berücksichtigen.

**Patentansprüche**

1. Verfahren zur Korrektur von Phase und Amplitude eines breitbandigen Empfangssignals mit Hilfe von mit einem Empfangssignal übertragenen Referenzsignalen (REF), wobei von einer Steuereinheit (MP) eine Korrekturkennlinie aufgrund der auf bekannte Art und Weise ermittelten Übertragungsfunktion beteiligter Baugruppen und/oder der Übertragungsstrecke berechnet wird und das Kurzzeitspektrum (SP) des Empfangssignals mit der Korrekturkennlinie gewichtet wird, wobei die Amplitudenkorrektur des Empfangssignals aufgrund eines Vergleichs zwischen der Empfangssignalamplitude und einer abgespeicherten Amplitude erfolgt,

**dadurch gekennzeichnet, dass**

die Amplituden- und Phasenkorrektur des Empfangssignals durch die Korrekturkennlinie aufgrund der Amplituden- und Phasendifferenz von mindestens zwei Referenzsignalen (REF), welche eine Referenzphase (PR) und Referenzamplitude aufweisen, berechnet wird, indem aus der zeitabhängigen Änderung des Referenzsignals (REF) die Korrekturkennlinie interpoliert wird und/oder aus der frequenzabhängigen Änderung des Referenzsignals (REF) die Korrekturkennlinie interpoliert wird und nach der Korrektur eine Maximum-Likelihood-Entscheidung bezüglich der korrigierten Phasen und Amplituden durchgeführt wird.

2. Verfahren nach Anspruch 1,
**dadurch gekennzeichnet, dass**
Signale, welche eine Referenzphase (PR) und/oder Referenzamplitude aufweisen, oder die Rerenzphase (PR) und/oder Referenzamplitude selbst, gespeichert werden und dass zur Berechnung der Phasenkorrektur (Pfi) und Amplitudenkorrektur auch gespeicherte Referenzphasen (PR) und Referenzamplituden verwendet werden.

3. Verfahren nach Anspruch 1 oder 2,
**dadurch gekennzeichnet, dass**
die Korrektur des Empfangssignals durch eine komplexe Multiplikation der Korrekturkennlinie mit dem Kurzzeitspektrum (SP) des Empfangssignals erfolgt.

4. Verfahren nach einem oder mehreren der Ansprüche 1 bis 3,
**dadurch gekennzeichnet, dass**
die Korrektur an einer Stelle im Signalpfad durchgeführt wird, an der das Kurzzeitspektrum (SP) des Empfangssignals bereits vorliegt.

5. Verwendung eines Verfahrens nach einem oder mehreren der Ansprüche 1 bis 4 bei der Übertragung digitaler Fernsehdaten.

6. Schaltungsanordnung zur Durchführung des Verfahrens nach einem oder mehreren der Ansprüche 1 bis 5,
**dadurch gekennzeichnet, dass**
nach einem Fouriertransformator (FFT) eine Steuereinheit (MP) im Signalpfad angeordnet ist und dass diese Steuereinheit (MP) mit einem Speicher (SPE) verbunden ist, in den Empfangsdaten (SP) und Kennliniendaten eingeschrieben werden, und dass die Steuereinheit (MP) mit einen Demodulator (DMOD) verbunden ist.

**Claims**

1. Method of correcting phase and amplitude of a broadband incoming signal with the aid of reference signals (REF) transmitted with an incoming signal, wherein a correction characteristic curve is calculated by a control unit (MP) on the basis of the transfer function, determined in a known manner, of participating assemblies and/or transmission paths, and the short-term spectrum (SP) of the incoming signal is weighted with the correction characteristic curve, wherein the amplitude of the incoming signal is corrected on the basis of a comparison between the incoming-signal amplitude and a stored amplitude, **characterized in that** the amplitude and phase correction of the incoming signal by the correction characteristic curve is calculated on the basis of the amplitude difference and phase difference of at least two reference signals (REF) that have a reference phase (PR) and a reference amplitude by interpolating the correction characteristic curve from the time-dependent change in the reference signal (REF) and/or by interpolating the correction characteristic curve from the frequency-dependent change in the reference signal (REF) and by performing, after the correction, a maximum-likelihood decision in regard to the corrected phases and amplitudes.

2. Method according to Claim 1, **characterized in that** signals that have a reference phase (PR) and/or reference amplitude or the reference phase (PR) and/or reference amplitude themselves are stored and **in that**, to calculate the phase correction (Pfi) and the amplitude correction, stored reference phases (PR) and reference amplitudes are also used.

3. Method according to Claim 1 or 2, **characterized in that** the incoming signal is corrected by a complex multiplication of the correction characteristic curve by the short-term spectrum (SP) of the incoming signal.

4. Method according to one or more of Claims 1 to 3, **characterized in that** the correction is performed at a point in the signal path at which the short-term spectrum (SP) of the incoming signal is already available.

5. Use of a method according to one or more of Claims 1 to 4 in the transmission of digital television data.

6. Circuit arrangement for performing the method according to one or more of Claims 1 to 5, **characterized in that** a control unit (MP) is disposed downstream of a Fourier transformer (FFT) in the signal path and **in that** said control unit (MP) is connected to a memory (SPE) into which reception data (SP) and characteristic curve data are written and **in that** the control unit (MP) is connected to a demodulator (DMOD).

**Revendications**

1. Procédé de correction d'erreurs de phase et d'amplitude d'un signal de réception à large bande à l'aide de signaux de référence (REF) retransmis avec un signal de réception, une unité de commande (MP) se chargeant de calculer une courbe caractéristique de correction sur la base de la fonction de retransmission déterminée de la manière connue de sous-groupes participants et/ou du trajet de retransmission et le spectre momentané (SP) du signal de réception sera pondéré avec la courbe caractéristique de correction, la correction d'amplitude du signal de réception se faisant sur la base d'une comparaison entre l'amplitude du signal de réception et d'une amplitude mémorisée,
**se caractérisant par le fait que**
la correction d'amplitude et de phase du signal de réception sera calculée sur la base de la différence d'amplitude et de phase de deux signaux de référence au moins (REF) qui présentent une phase de référence (PR) et une amplitude de référence, en interpolant la courbe caractéristique de correction à partir de la modification en fonction du temps du signal de référence (REF) et/ou à partir de la modification en fonction de la fréquence du signal de référence (REF) et en exécutant après la correction une décision du maximum de vraisemblance en ce qui concerne les phases et les amplitudes corrigées.

2.  Procédé selon la revendication 1,
    **se caractérisant par le fait que**
    des signaux qui présentent une phase de référence (PR) et/ou une amplitude de référence, ou la phase de référence (PR) et/ou l'amplitude de référence même, sont mémorisés et que les phases de références (PR) et les amplitudes de référence mémorisées sont aussi utilisées pour le calcul de la correction de phase (Pfi) et de l'amplitude.

3.  Procédé selon la revendication 1 ou 2,
    **se caractérisant par le fait que**
    la correction du signal de réception se fait par le biais d'une multiplication complexe de la courbe caractéristique de correction avec le spectre momentané (SP) du signal de réception.

4.  Procédé selon l'une ou plusieurs des revendications 1 à 3,
    **se caractérisant par le fait que**
    la correction est exécutée à un endroit du cheminement du signal où le spectre momentané (SP) du signal de réception existe déjà.

5.  Emploi d'un procédé selon l'une ou plusieurs des revendications 1 à 4 lors de la retransmission de données télévisées numériques.

6.  Disposition de circuit pour l'exécution du procédé selon l'une ou plusieurs des revendications 1 à 5,
    **se caractérisant par le fait que**
    après un transformateur de Fourier (FFT), une unité de commande (MP) est placée dans le cheminement du signal et que cette unité de commande (MP) est reliée à une mémoire (SPE) dans laquelle des données de réception (SP) et de courbes caractéristiques sont inscrites et que l'unité de commande (MP) est reliée à un démodulateur (DMOD).

Fig. 1

Fig. 2

Fig. 3

Fig. 4

Fig. 5